Europäisches Patentamt

European Patent Office

Office européen des brevets

(11) Numéro de publication: **0 073 730**
**B1**

(12) **FASCICULE DE BREVET EUROPEEN**

(45) Date de publication du fascicule du brevet: **18.05.88**

(51) Int. Cl.⁴: **B 27 D 3/04,** F 16 C 29/06

(21) Numéro de dépôt: **82440026.1**

(22) Date de dépôt: **30.08.82**

(54) **Dispositif pour le déplacement d'une surface en compression par rapport à une autre.**

(30) Priorité: **01.09.81 FR 8116738**

(43) Date de publication de la demande:
**09.03.83 Bulletin 83/10**

(45) Mention de la délivrance du brevet:
**18.05.88 Bulletin 88/20**

(84) Etats contractants désignés:
**AT BE CH DE GB IT LI NL SE**

(56) Documents cités:
**EP-A-0 055 201**
**DE-A-2 742 095**
**FR-A- 995 524**
**FR-A-2 163 014**

**"MASCHINENTEILE" Köhler/Rögnitz partie 2,
chap. 7.3, paragraph 7.3.1 - Kettenbauarten /
1976**

(73) Titulaire: **Burger, Raymond
7, Place de la Fleur
F-68160 Sainte-Marie-Aux-Mines (FR)**

(72) Inventeur: **Burger, Raymond
7, Place de la Fleur
F-68160 Sainte-Marie-Aux-Mines (FR)**

(74) Mandataire: **Nuss, Pierre
10, rue Jacques Kablé
F-67000 Strasbourg (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un dispositif de translation d'une surface mobile en compression par rapport à une surface fixe.

Un tel dispositif est destiné à répondre aux problèmes posés de plus en plus fréquemment dans l'industrie, par le déplacement sous forte pression d'une surface par rapport à une autre.

Le graissage et l'emploi de matériaux antifriction suffisent pour de faibles pressions. Pour des pression plus élevées, on utilise des billes, des aiguilles ou des galets disposés dans des cages sous forme de plaques. Ces dispositifs sont limités dans leurs applications pour des mouvements de va-et-vient, des surfaces restreintes, et ne permettent pas d'assurer la translation d'une surface par rapport à l'autre, celle-ci devant se faire par un mécanisme séparé appliqué à la surface mobile.

On connaît par EP—A—55 201, à considérer sous les termes de l'article 54 (3) de la CBF, un dispositif de translation d'une surface mobile constituée de plaques métalliques articulées entre elles en compression par rapport à une surface fixe, des moyens de roulement actionnés par au moins un pignon moteur étant interposés entre ces deux surfaces.

La présente invention a pour objet un tel dispositif de translation d'une surface mobile eu compression par rapport à une surface fixe, la surface mobile étant constituée de plaques métalliques acticulées entre elles ou de plaques flexibles non articulées entre elles, des moyens de roulement actionnés par au moins un pignon moteur étant interposés entre ces deux surfaces ces moyens de roulement ètant réalisés sous la forme d'une chaîne comprenant des galets en rotation sur des douilles sur des axes espacés par des maillons, l'une au moins des surfaces mobile fixe, comportant une gorge, ou chemin de roulement, dans laquelle circule la chaîne avec le moins de jeu latéral possible, la largeur de la gorge correspondant sensiblement, soit à la largeuer des galets soit à la distance entre les faces extérieures des maillons.

La chaîne de roulement interposée entre les surfaces mobile et fixe est destinée à réunir trois fonctions, à savoir:

1) une fonction de transmission des efforts de compression de la surface en mouvement par rapport à la surface fixe,

2) une fonction de traction de la surface en mouvement par rapport à la surface fixe, la chaîne de roulement étant actionnée par au moins un pignon moteur, et

3) une fonction de guidage, la chaîne de roulement circulant dans des chemins de roulement, ou gorges, munis de rives.

En remplissant ces trois fonctions, la chaîne de roulement apporte des avantages importants:

1) Des pressions très élevées peuvent être transmises, la structure de la chaîne de roulement permettant l'emploi d'un grand nombre de galets par unités de surface.

2) Le constructeur de machines, grâce à la chaîne de roulement, pourra faire absorber les efforts de compression par la surface fixe (engénéral un bâti) et alléger les surfaces mobiles (plaques, plaques articulées ou rubans métalliques) dont la fonction sera limitée à une fonction de support et de roulement. Par l'emploi de plusieurs chaînes de roulement comportant une ou plusieurs rangées de galets, aucune limite de surface n'est imposée.

3) En utilisant la chaîne de roulement pour la translation de la surface mobile par rapport à la surface fixe, on supprime tout mécanisme normalement nécessaire, ce qui en soi est déjà d'un de vue constructif, un avantage considérable.

4) La chaîne de roulement comporte tous les avantages de la chaîne de transmission classique à rouleaux, souplesse, résistance, longue durée.

5) La structure de la chaîne de roulement permet un guidage parfait des galets. Lorsque celle-ci est sous forte pression, il est indispensable que les axes des galets soient bien perpendiculaires à l'axe de déplacement de la surface mobile par rapport à la surface fixe.

6) Il est particulièrement avantageux d'avoir un rapport diamètre des galets sur largeur de ceux-ci aussi élévé que possible, pour réduire les efforts de déviation dûs à l'apparition par l'usure d'un jeu trop grand donnant trop de liberté à ceux-ci. La structure de la chaîne de roulement permet d'obtenir ce rapport.

7) Par le structure même de la chaîne de roulement, le guidage de celle-ci peut être assuré par des chemins de roulement, ou gorges, munis de rives dont la surface est suffisante pour que l'usure dûe au frottement soit aussi faible que possible.

L'application du dispositif de translation, composée de la chaîne de roulement, de pignons, et de pièces de guidage sera, par la standartisation de sa fabrication et de ses applications, avantageuse par ses propriétés de durée et de coût.

L'invention sera mieux comprise par la description ci-après, donnée à titre d'exemple non limitatif, et expliquée avec référence au dessin schématique annexé, dans lequel:

La figure 1 est une vue en coupe schématique d'un dispositif conforme à l'invention, muni d'une chaîne quadruple interposée entre une surface fixe (bâti) et une surface mobile (plaque), perpendiculairement à l'axe de celle-ci, et

la figure 2 est une vue en couple de la chaîne parallèlement à l'axe de celle-ci.

Les galets 1 réalisés en acier dur traité sont montés sur des douilles 2 assemblées avec des maillons 3 sur des axes 4.

Ces galets 1 d'un diamètre supérieur à la hauteur des maillons 3 sont interposés entre la plaque mobile 5 et le bâti fixe 6.

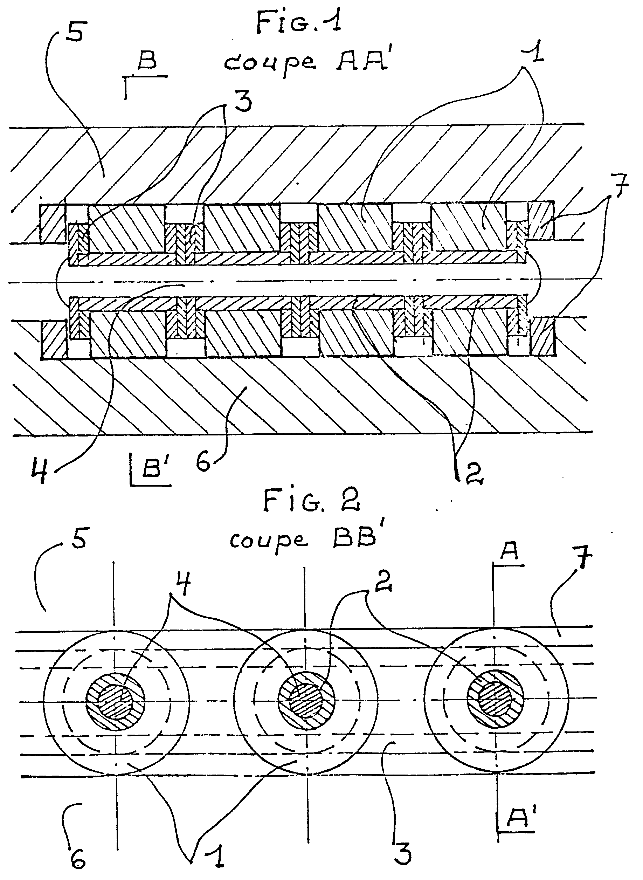

Dans l'exemple illustré, les maillons extérieurs 3 de la chaîne assurent un guidage en venant prendre appui sur des profilés ou rives amovibles 7 du chemin de roulement ou de la gorge de guidage. Pour certains emplois, ces rives ou profilés peuvent être taillés dans la masse et peuvent ne pas être interchangeables. Il en est de même des chemins de roulement sur lesquels circulent les galets. Sur la figure 1, ces chemins de roulement sont taillés dans la masse. En généralisant l'emploi de la chaîne de roulement, il sera utile de proposer des profils standartisés s'adaptant à chaque type de chaîne et de galet, la nature du métal étant choisie pour obtenir un coefficient de roulement optimum et une usure aussi faible que possible, à savoir par exemple un matériau antifriction.

Sur le dessin ne figure pas le dispositif d'entraînement de la chaîne constituée par un pignon moteur, comportant par exemple seize dents, d'un pas évidemment identique à celui de la chaîne. Ne figure pas non plus le pignon de renvoi situé en aval sur le même plan que le pignon moteur.

L'effort de traction à exercer sur la chaîne étant en général inférieur au 1/100e de la charge totale de compression transmise par celle-ci, il est en général avantageux d'utiliser un nombre de pignons inférieur au nombre de rangées de galets de la chaîne. Des abaques bien précis pourront conseiller l'utilisateur.

La vitesse linéaire de la chaîne de roulement est égale à la moitié de la vitesse linéaire de la surface en déplacement, ce qui sur le plan de l'usure est un avantage non négligeable.

## Revendications

1. Dispositif de translation d'une surface mobile en compression par rapport à une surface fixe (6) la surface mobile étant constituée de plaques métalliques (5) articulées entre elles ou de plaques flexibles non articulées entre elles, des moyens de roulement actionnés par au moins un pignon moteur étant interposés entre ces deux surfaces, ces moyens de roulement étant réalisés sous la forme d'une chaîne comprenant des galets (1) en rotation sur des douilles (2) sur des axes (4) espacés par des maillons (3), l'une au moins des surfaces mobile (5) ou fixe (6), comportant une gorge, ou chemin de roulement, dans laquelle circule la chaîne avec le moins de jeu latéral possible, la largeur de la gorge correspondant sensiblement, soit à la largeur des galets (1), soit à la distance entre les faces extérieures des maillons (3).

2. Dispositif selon la revendication 1, caractérisé en ce que la chaîne de roulement est constituée de plusieurs rangées de galets (1).

3. Dispositif selon l'une quelconque des revendications 1 et 2, caractérisé en ce qu'il comporte un nombre de pignons moteurs inférieur au nombre de rangées de galets (1).

4. Dispositif selon l'une quelconque des revendications 1 à 3, caractérisé en ce que plusieurs chaînes de roulement sont disposées côte à côte, l'une au moins de ces chaînes étant motrice.

5. Dispositif selon l'une quelconque des revendications 1 à 4, caractérisé en ce que les surfaces de guidage sont garnies de profilés ou de rives amovibles (7), en matériau antifriction, prenant appui soit sur les faces extérieures des maillons (3), soit sur les bords des galets (1).

## Patentansprüche

1. Vorrichtung für die Verschiebung einer beweglichen Kompressionsfläche bezüglich einer anderen, feststehenden Fläche (6), wobei die bewegliche Fläche aus entweder zueinander gegliederten Metallplatten (5) oder aus nicht zueinander gegliederten, biegsamen Platten besteht und Roll-Bestandteile, angetrieben von wenigstens einem Antriebsritzel, zwischen diesen beiden Fläche angeordnet sind, wobei diese Roll-Bestandteile in der Form einer Kette, die Laufrollen (1) beträgt, welche mittels Büchsen (2), auf Achsen (4), in Drehung sind, die durch Kettenglieder (3) beabstandet sind, gestaltet sind, wobei mindestens eine der Flächen, sie es die bewegliche (5) oder die feststehende (6), eine Kehle oder Laufrille, in welcher sich die Kette mit geringstmöglichem Seitenspiel fortbewegt, aufweist, wobei die Breite dieser Kehle nahezu der Breite der Laufrolle (1), beziehungsweise dem Abstand zwischen den Aussenwänden der Kettenglieder (3) entspricht.

2. Vorrichtung nach Anspruch 1, dadurch gekennzeichnet, dass die Rollkette aus mehreren Reihen von Laufrollen (1) besteht.

3. Vorrichtung nach einem der Ansprüche 1 oder 2, dadurch gekennzeichnet, dass sie eine geringere Anzahl von Antriebsritzeln als die Anzahl von Reihen von Laufrollen (1) beträgt.

4. Vorrichtung nach einem der Ansprüche 1 bis 3, dadurch gekennzeichnet, dass mehrere Rollketten nebeneinander, Seite an Seite, angeordnet sind, von welchen Ketten mindestens eine antreibend ist.

5. Vorrichtung nach einem der Ansprüche 1 bis 4, dadurch gekennzeichnet, dass die Führungsflächen mit profilierten Bestandteilen oder abnehmbaren Randstreifen (7), aus reibungsminderndem Werkstoff, bestückt sind, die sich entweder auf der Aussenwände der Kettenglieder (3) oder auf der Randflächen der Laufrollen (1) abstützen.

## Claims

1. A device for the translation of a surface which is movable under compression in relation to a fixed surface (6), the movable surface consisting of metallic plates (5) articulated to one another or of flexible plates which are not articulated to one another, rolling means actuated by at least one drive pinion being interposed between these two surfaces, these rolling means being constructed in the form of a chain comprising rollers (1) rotating on bushes (2) on shafts (4) spaced apart by chain links (3), at least one of the surfaces, either movable (5) or fixed (6), comprising a groove or rolling track in which the chain circulates with the least possible lateral play, the width of the groove corresponding substantially either to the width of the rollers (1) or to the distance between the external faces of the chain links (3).

2. A device according to Claim 1, characterised in that the rolling chain consists of a plurality of rows of rollers (1).

3. A device according to either one of the Claims 1 and 2, characterised in that it comprises a number of drive pinions smaller that the number of rows of rollers (1).

4. A device according to any one of the Claims 1 to 3, characterised in that a plurality of rolling chains are disposed side by side, at least one of these chains being a driving chain.

5. A device according to any one of the Claims 1 to 4, characterised in that the guide surfaces are equipped with removable sectional bars or edges (7) of antifriction material, resting either on the external faces of the chain links (3) or on the edges of the rollers (1).

FIG.1
coupe AA'

FIG. 2
coupe BB'